(19) Europäisches Patentamt
European Patent Office
Office européen des brevets

(11) Veröffentlichungsnummer: **0 072 575**
**A1**

(12) # EUROPÄISCHE PATENTANMELDUNG

(21) Anmeldenummer: 82107546.2

(22) Anmeldetag: 18.08.82

(51) Int. Cl.³: C 07 C 87/58
C 09 K 15/18
//C07C93/14

(30) Priorität: 19.08.81 DE 3132795

(43) Veröffentlichungstag der Anmeldung: 23.02.83 Patentblatt 83/8

(84) Benannte Vertragsstaaten: BE DE FR GB IT NL

(71) Anmelder: Chemische Werke Lowi GmbH
2 Beuthener Strasse
D-8264 Waldkraiburg(DE)

(72) Erfinder: Müller, Rolf, Dipl.-Ing.
Berghamer Strasse 21a
D-8261 Polling(DE)

(72) Erfinder: Hartmann, Werner, Dr.
Finkenweg 10
D-8264 Waldkraiburg(DE)

(74) Vertreter: Spott, Gottfried, Dr. et al,
Patentanwälte Spott und Puschmann
Sendlinger-Tor-Platz 11
D-8000 München 2(DE)

(54) **N,N'-Diphenyl-p-phenylendiamine, Verfahren zu ihrer Herstellung und ihre Verwendung als Stabilisatoren für organische Materialien.**

(57) N,N'-Diphenyl-p-phenylendiamine der Formel

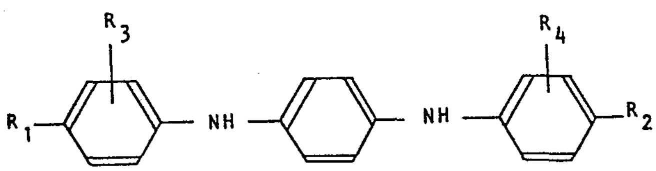

worin $R_1$ und $R_2$ jeweils gleich oder verschieden sein können und Wasserstoff, 2-Methylbutyl-(2), 2,4,4-Trimethylpentyl-(2), 4,6-Dimethylheptyl-(2), 4,6,8-Trimethylnonyl-(2), Cyclohexyl, 1-Phenylethyl-(1) oder 2-Phenylpropyl-(2) bedeuten, jedoch nicht zugleich Wasserstoff sein können, und

$R_3$ und $R_4$ jeweils gleich oder verschieden sein können und Wasserstoff, Methyl, Ethyl oder Methoxy sind. Diese Verbindungen sind Stabilisatoren für organische Materialien, die diese insbesondere vor Alterung unter dem Einfluß von Wärme, Luftsauerstoff, Ozon, Licht, mikrobieller Beeinflussung und dynamischer Beanspruchung, gegebenenfalls unter gleichzeitiger katalytischer Wirkung von Schwermetallen, schützen und somit wertvolle Alterungsschutzmittel für solche Materialien darstellen.

EP 0 072 575 A1

Croydon Printing Company Ltd

0072575

LO 6

CHEMISCHE WERKE LOWI GMBH
Beuthener Straße 2
D - 8264 Waldkraiburg

---

N,N'-Diphenyl-p-phenylendiamine, Verfahren zu ihrer Herstellung und ihre Verwendung als Stabilisatoren für organische Materialien

---

Organische Materialien werden bekanntlich durch Einwirkung von beispielsweise Wärme, Luftsauerstoff und Ozon, Licht, besonders Ultraviolettstrahlen, mikrobieller Beeinflussung oder dynamischer Beanspruchung abgebaut. Dieser zum Teil auf einer Autoxidation beruhende Alterungsvorgang kann durch die in vielen solcher Materialien vom Herstellungsverfahren oder von der Umgebung her enthaltenen Schwermetalle, besonders Metallen der Übergangsgruppen des Periodensystems der Elemente, zudem katalytisch beschleunigt werden. Einem solchen im wesentlichen rein oxidativen, thermooxidativen oder photochemooxidativen Abbau unterliegen praktisch alle organischen Materialien, und insbesondere höhermolekulare Natur- und Syntheseprodukte, wie Naturkautschuke, Synthesekautschuke, Mischungen hiervon, Vulkanisate von Natur- und/oder Synthesekautschuken, Latices auf Basis von Natur- und/oder Synthesekautschuken, thermoplastische Polymere, natürliche oder synthetische Öle sowie flüssige Kohlenwasserstoffe für Verbrennungszwecke einschließlich Vergaserkraftstoffen und anderen Treibstoffen.

Ein derartiger Abbau ist mit einer sehr störenden Verschlechterung der physikalischen Eigenschaften der jeweiligen organischen Materialien verbunden, und es ist daher bereits seit langem üblich, diesem Alterungsvorgang durch Zusatz geringer Mengen sogenannter Stabilisatoren, welche den unerwünschten Abbau mehr oder weniger stark hemmen, entgegenzuwirken.

Ein bekannter und im Handel erhältlicher Stabilisator für organische Materialien ist beispielsweise N,N'-Diphenyl-p-phenylendiamin (Ullmanns Encyklopädie der technischen Chemie, 4.Aufl., Bd. 8, S. 33/34 (1974)), welches sich beispielsweise durch Umsetzen von Anilin mit Hydrochinon herstellen läßt (US-PS 2 503 778 oder US-PS 3 305 584). Dieser Stabilisator ergibt bei verschiedenen organischen Materialien zwar eine zufriedenstellende stabilisierende Wirkung, hat jedoch den Nachteil einer zu geringen Verträglichkeit, insbesondere mit Kohlenwasserstoffpolymeren, und eines Ausblühens bei der für eine optimale Wirksamkeit benötigten Dosierung, und er ist in flüssigen Kohlenwasserstoffen zudem nicht ausreichend löslich.

Ein weiterer handelsüblicher Stabilisator für organische Materialien ist das aus US-PS 2 530 769 bekannte p,p'-Dioctyldiphenylamin (Ullmans Encyklopädie der technischen Chemie, 4. Aufl., Bd. 8, S. 34 (1974)), welches beispielsweise durch Umsetzen von Diisobutylen mit Diphenylamin in Gegenwart eines Friedel-Crafts-Katalysators hergestellt werden kann. Dieser Stabilisator ist mit Kohlenwasserstoffpolymeren zwar gut verträglich und in flüssigen Kohlenwasserstoffen auch gut löslich, bezüglich seiner stabilisierenden Wirksamkeit jedoch sehr begrenzt. Er ergibt zwar eine gewisse Hemmung der durch Wärmeeinwirkung bedingten Alterung, weist jedoch praktisch keine Schutzwirkung gegen den Einfluß von vor allem Ozon und energiereicher Strahlung auf. Zudem läßt sich durch diese Verbindung weder die katalytische Wirksamkeit von Schwermetallen noch die durch dynamische Beanspruchung auftretende Ermüdung entsprechender organischer Materialien hemmen.

Die bekannten Stabilisatoren für organische Materialien haben obigen Ausführungen zufolge somit eine Reihe von Nachteilen, und Aufgabe der Erfindung ist daher die Bereitstellung neuer Verbindungen, die sich durch eine besonders gute und umfassende stabilisierende Wirkung bei organischen Materialien, insbesondere höhermolekularen und polymeren organischen Materialien, auszeichnen.

Diese Aufgabe wird nun durch die aus den Ansprüchen hervorgehenden N,N'-Diphenyl-p-phenylendiamine, das Verfahren zu ihrer Herstellung und ihre Verwendung zur Stabilisierung organischer Materialien erfindungsgemäß gelöst.

Die erfindungsgemäßen Verbindungen der allgemeinen Formel I zeichnen sich durch eine hervorragende stabilisierende Wirksamkeit bei den verschiedensten organischen Materialien der eingangs genannten Art aus. Sie schützen solche Materialien gegenüber einem Abbau durch Wärme, Luftsauerstoff, Ozon, Licht, insbesondere energiereiche Strahlung, und dynamische Beanspruchung, und sie hemmen oder unterbinden außerdem die mögliche Beschleunigung solcher Alterungsvorgänge durch die katalytische Wirksamkeit eventuell vorhandener Schwermetalle. Sie zeichnen sich hierbei durch eine besonders ausgeprägte Schutzwirkung gegenüber dem Einfluß von Ozon, Ultraviolettstrahlung und dynamischer Beanspruchung aus, weisen eine hohe Verträglichkeit insbesondere für Kohlenwasserstoffpolymere und eine besonders gute Löslichkeit in flüssigen Kohlenwasserstoffen auf und haben vor allem gegenüber dem bekannten N,N'-Diphenyl-p-phenylendiamin nicht den Nachteil eines Ausblühens und einer Verfleckung der Fertigprodukte.

Die N,N'-Diphenyl-p-phenylendiamine der genannten allgemeinen Formel I lassen sich herstellen, indem man ein N,N'-Diphenyl-p-phenylendiamin der allgemeinen Formel II

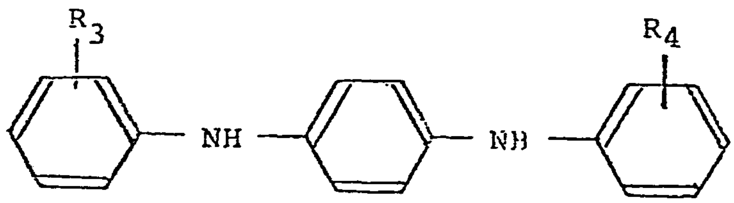

(II)

worin $R_3$ und $R_4$ die in Anspruch 1 genannten Bedeutungen haben, mit 2-Methylbuten-(1), Diisobuten, Tripropylen, Tetrapropylen, Cyclohexen, Styrol, alpha-Methylstyrol oder Gemischen hiervon bei erhöhter Temperatur, gegebenenfalls erhöhtem Druck und gegebenenfalls in Anwesenheit eines organischen Lösungsmittels, in an sich bekannter Weise in Gegenwart eines Friedel-Crafts-Katalysators umsetzt. Eine solche Umsetzung wird im allgemeinen bei erhöhter Temperatur, beispielsweise Temperaturen von 100 bis 200°C, vorzugsweise 130 bis 160°C, und zweckmäßigerweise auch bei erhöhtem Druck, beispielsweise Drücken von 1 bis 5 bar, vorzugsweise 1 bis 3 bar, unter Einsatz üblicher Friedel-Crafts-Katalysatoren, wie $AlCl_3$, durchgeführt. Gegebenenfalls kann auch in Anwesenheit organischer Lösungsmittel gearbeitet werden, beispielsweise aliphatischen Lösungsmitteln, wie Lösungsbenzinen mit einem Siedebereich von 70 bis 180°C, oder aromatischen Lösungsmitteln, wie Benzol, Toluol, Xylol oder Naphtha, wobei auch die als Reagens benötigte Vinylverbindung die Funktion eines Lösungsmittels übernehmen kann.

Bei der obigen Umsetzung fallen die erfindungsgemäßen N,N'-Diphenyl-p-phenylendiamine als überwiegendes Produkt an. Der Rest besteht im allgemeinen aus in anderen Stellungen der Phenylreste substituierten Produkten, wobei natürlich auch noch nichtumgesetzte Ausgangsmaterialien vorhanden sein können. Das erhaltene Reaktionsgemisch muß zur Gewinnung des gewünschten Produkts daher normalerweise entsprechend aufgearbeitet werden, wobei eventuell noch vorhandene geringe Mengen an Nebenprodukten oder Ausgangsprodukten die Wirkungsweise als Stabilisator im allgemeinen jedoch nicht oder nur unwesentlich beeinträchtigen. Nach Abschluß der Umsetzung läßt man das Reaktionsgemisch daher

im allgemeinen zuerst abkühlen, entfernt oder zerstört dann entweder durch Auswaschen oder Neutralisation den Katalysator und unterzieht das Ganze zur Ausdestillation flüchtiger Bestandteile schließlich einer Vakuumdestillation, beispielsweise bis zu einer Temperatur von 200°C, worauf man das zurückbleibende Produkt erstarren läßt und so im allgemeinen zu einem bräunlichen bis braunschwarzen Feststoff gelangt.

Die zur Herstellung der vorliegenden Verbindungen benötigten Ausgangsmaterialien der allgemeinen Formel II stellen insgesamt bekannte Verbindungen dar. Auf ihre Herstellung braucht daher nicht näher eingegangen zu werden.

Die Erfindung wird im folgenden anhand von Herstellungsbeispielen und Anwendungsbeispielen weiter erläutert, die auch entsprechende Vergleiche mit dem eingangs erwähnten nächstliegenden Stand der Technik enthalten.

Beispiel 1

Gemisch aus N,N'-Di-/4-(2,4,4-trimethylpentyl-(2))-phenyl/-p-phenylendiamin und N-Phenyl-N'-/4-(2,4,4-trimethylpentyl-(2))-phenyl/-p-phenylendiamin

a) N,N'-Diphenyl-p-phenylendiamin

In einem Autoklav werden 220 g Hydrochinon, 530 g Anilin und 3,2 g Triethylphosphit vermischt und dann 4,5 Stunden auf 300°C aufgeheizt. Hierdurch baut sich ein Druck von 9 bar auf. Während der Umsetzung werden 79 g Wasser azeotrop aus dem Autoklav ausdestilliert. Die Reaktionsmischung wird dann einer fraktionierenden Destillation unterworfen, wobei zunächst das überschüssige Anilin abdestilliert wird. Bei einem Druck von 0,65 mbar werden bis zu einer Temperatur von 220°C 63,2 g einer Zwischenfraktion abgenommen, und dann destillieren zwischen 220 bis 225°C 393 g N,N'-Diphenyl-p-phenylendiamin über.

b) Gemisch aus N,N'-Di-/4-(2,4,4-trimethylpentyl-(2))-phenyl/-p-phenylendiamin und N-Phenyl-N'-/4-(2,4,4-trimethylpentyl-(2))-phenyl/-p-phenylendiamin

260,3 g (1 Mol) des nach Stufe a) erhaltenen Produkts werden im Autoklav aufgeschmolzen und nacheinander mit 38,5 g wasserfreiem Aluminiumchlorid und 380,7 g (3,4 Mol) Diisobuten versetzt. Der Reaktor wird gegen die Atmosphäre verschlossen und die Reaktionsmischung 7 Stunden auf 130°C aufgeheizt. Dabei baut sich ein Überdruck von etwa 1 bar auf. Zur Katalysatorentfernung wird das Reaktionsgemisch auf 110°C abgekühlt, mit 25 g Natriumchlorid sowie 38,5 g basischem Aluminiumoxid versetzt und 30 Minuten gerührt. Die neutralisierte Reaktionsmischung wird über ein Druckfilter filtriert. Das Filtrat wird mittels einer Vakuumdestillation (35 mbar, bis 170°C Blasentemperatur) von überschüssigem Diisobuten und leichtflüchtigen Nebenpro-

dukten, wie dimerem Diisobuten, befreit, und durch anschließendes Abkühlen der hierbei erhaltenen Schmelze gelangt man zu 396 g eines Gemisches aus den im Titel genannten Verbindungen, das bei 64 bis 66°C schmilzt. Eine gaschromatographische Analyse zeigt, daß die beiden Verbindungen in diesem Gemisch in einem Gewichtsverhältnis von 64 zu 36 enthalten sind.

## Beispiel 2

Gemisch aus N,N'-Di-/4-(2,4,4-trimethylpentyl-(2))-phenyl/-p-phenylendiamin und N-Phenyl-N'-/4-(2,4,4-trimethylpentyl-(2))-phenyl/-p-phenylendiamin

260,3 g (1 Mol) N,N-Diphenyl-p-phenylendiamin, 380,7 g (3,4 Mol) Diisobuten und 38 g wasserfreies Aluminiumchlorid werden in einen 600 ml Rührautoklav gegeben und 7 Stunden auf 135°C erhitzt, wobei sich ein Druck von 1 bar aufbaut. Das Reaktionsgemisch wird anschließend auf 80°C abgekühlt und mit 50 %-iger Natronlauge auf pH 8 bis 9 eingestellt. Die organische Phase wird einer Vakuumdestillation (35 mbar, bis 170°C Blasentemperatur) unterworfen und der verbleibende Rückstand abgekühlt, wodurch man zu 434 g eines Gemisches aus den im Titel genannten Verbindungen gelangt, das bei 64 bis 66°C schmilzt. Eine gaschromatographische Analyse zeigt, daß die beiden Verbindungen in diesem Gemisch in einem Gewichtsverhältnis von 83 zu 17 enthalten sind.

## Beispiel 3

Gemisch aus N,N'-Di-/4-(2,4,4-trimethylpentyl-(2))-phenyl/-p-phenylendiamin und N-Phenyl-N'-/4-(2,4,4-trimethylpentyl-(2))-phenyl/-p-phenylendiamin

Das in Beispiel 2 beschriebene Verfahren wird unter Verwendung von 260,3 g (1 Mol) N,N'-Diphenyl-p-phenylendiamin, 224,4 g (2 Mol) Diisobuten und 38 g wasserfreiem

Aluminiumchlorid wiederholt, wodurch man zu 420 g eines Gemisches aus den im Titel genannten Verbindungen gelangt, das bei 35 bis 37°C schmilzt. Eine gaschromatographische Analyse zeigt, daß die beiden Verbindungen in diesem Gemisch in einem Gewichtsverhältnis von 75 zu 25 enthalten sind.

## Beispiel 4

Gemisch aus N,N'-Di-/4-(2,4,4-trimethylpentyl-(2))-phenyl/-p-phenylendiamin und N-Phenyl-N'-/4-(2,4,4-trimethylpentyl-(2))-phenyl/-p-phenylendiamin

Das in Beispiel 2 beschriebene Verfahren wird unter Verwendung von 260,3 g (1 Mol) N,N'-Diphenyl-p-phenylendiamin, 134,7 g (1,2 Mol) Diisobuten und 23,7 g wasserfreiem Aluminiumchlorid wiederholt, wodurch man zu 360,2 g eines Gemisches aus den im Titel genannten Verbindungen gelangt, das bei 86 bis 92°C schmilzt. Eine gaschromatographische Analyse zeigt, daß die beiden Verbindungen in diesem Gemisch in einem Gewichtsverhältnis von 12 zu 88 enthalten sind.

## Beispiel 5

Gemisch aus N,N'-Di-/4-(2-methylbutyl-(2))-phenyl/-p-phenylendiamin und N-Phenyl-N'-/4-(2-methylbutyl-(2))-phenyl/-p-phenylendiamin

Das in Beispiel 2 beschriebene Verfahren wird unter Verwendung von 260,3 g (1 Mol) N,N'-Diphenyl-p-phenylendiamin, 238,7 g (3,4 Mol) 2-Methylbuten-(1) und 23,7 g wasserfreiem Aluminiumchlorid wiederholt, wodurch man zu 404,4 g eines Gemisches aus den im Titel genannten Verbindungen gelangt, das bei 73 bis 79°C schmilzt. Eine gaschromatographische Analyse zeigt, daß die beiden Verbindungen in diesem Gemisch in einem Gewichtsverhältnis von 64 zu 35 enthalten sind.

## Beispiel 6

Gemisch aus N,N'-Di-/4-(4,6-dimethylheptyl-(2))-phenyl/-p-phenylendiamin und N-Phenyl-N'-/4-(4,6-dimethylheptyl-(2))-phenyl/-p-phenylendiamin

Das in Beispiel 2 beschriebene Verfahren wird unter Verwendung von 260,3 g (1 Mol) N,N'-Diphenyl-p-phenylendiamin, 429,2 g (3,4 Mol) Tripropylen und 38,5 g wasserfreiem Aluminiumchlorid wiederholt, wodurch man zu 450 g eines Gemisches aus den im Titel genannten Verbindungen gelangt, das bei 21 bis 26°C schmilzt. Eine gaschromatographische Analyse zeigt, daß die beiden Verbindungen in diesem Gemisch in einem Gewichtsverhältnis von 77 zu 23 enthalten sind.

## Beispiel 7

Gemisch aus N,N'-Di-/4,6,8-trimethylnonyl-(2))-phenyl/-p-phenylendiamin und N-Phenyl-N'-/4,6,8-trimethylnonyl-(2))-phenyl/-p-phenylendiamin

Das in Beispiel 2 beschriebene Verfahren wird unter Verwendung von 260,3 g (1 Mol) N,N'-Diphenyl-p-phenylendiamin, 572,5 g (3,4 Mol) Tetrapropylen und 38,5 g wasserfreiem Aluminiumchlorid wiederholt, wodurch man zu 525 g eines Gemisches aus den im Titel genannten Verbindungen in Form einer hochviskosen Flüssigkeit gelangt. Eine gaschromatographische Analyse zeigt, daß die beiden Verbindungen in diesem Gemisch in einem Gewichtsverhältnis von 12 zu 88 enthalten sind.

## Beispiel 8

Gemisch aus N,N'-Di-(4-cyclohexylphenyl)-p-phenylendiamin und N-Phenyl-N'-(4-cyclohexylphenyl)-p-phenylendiamin

Das in Beispiel 2 beschriebene Verfahren wird unter Verwendung von 260,3 g (1 Mol) N,N'-Diphenyl-p-phenylendiamin, 484,6 g (3,4 Mol) Cyclohexen und 38,5 g wasserfreiem Aluminiumchlorid wiederholt, wodurch man zu 381 g eines Gemisches aus den im Titel genannten Verbindungen gelangt, das bei 50 bis 53°C schmilzt. Eine gaschromatographische Analyse zeigt, daß die beiden Verbindungen darin in einem Gewichtsverhältnis von 47 zu 53 enthalten sind.

## Beispiel 9

Gemisch aus N,N'-Di-/4-(1-phenylethyl-(1))-phenyl7-p-phenylendiamin und N-Phenyl-N'-/4-(1-phenylethyl-(1))-phenyl7-p-phenylendiamin

Das in Beispiel 2 beschriebene Verfahren wird unter Verwendung von 260,3 g (1 Mol) N,N'-Diphenyl-p-phenylendiamin, 354,4 g (3,4 Mol) Styrol und 38,5 g wasserfreiem Aluminiumchlorid wiederholt, wodurch man zu 554 g eines Gemisches aus den im Titel genannten Verbindungen gelangt, das bei 64 bis 67°C schmilzt. Eine gaschromatographische Analyse zeigt, daß die beiden Verbindungen in einem Gewichtsverhältnis von 16 zu 84 enthalten sind.

## Beispiel 10

Gemisch aus N,N'-Di-/4-(2,4,4-trimethylpentyl-(2))-phenyl7-p-phenylendiamin, N-Phenyl-N'-/4-(2,4,4-trimethylpentyl-(2))-phenyl7-p-phenylendiamin, N,N'-Di-/4-(1-phenylethyl-(1))-phenyl7-p-phenylendiamin, N-Phenyl-N'-/4-(1-phenylethyl-(1))-phenyl7-p-phenylendiamin und N-/4-(2,4,4-trimethylpentyl-(2))-phenyl7-N'-/4-(1-phenylethyl-(1))-phenyl7-p-phenylendiamin

Das in Beispiel 2 beschriebene Verfahren wird unter Verwendung von 260,3 g (1 Mol) N,N'-Diphenyl-p-phenylendiamin, 130,2 g (1,25 Mol) Styrol, 140,3 g (1,25 Mol)Diisobuten und 38,5 g wasserfreiem Aluminiumchlorid wiederholt, wodurch man zu 617 g eines Gemisches aus den im Titel genannten Verbindungen gelangt, das bei 41 bis 44,5°C schmilzt. Eine gaschromatographische Analyse zeigt, daß die fünf Verbindungen darin in einem Gewichtsverhältnis von 12 zu 10 zu 23 zu 16 zu 39 enthalten sind.

## Beispiel 11

Gemisch aus N,N'-Di-/4-(2-phenylpropyl-(2))-phenyl/-p-phenylendiamin und N-Phenyl-N'-/4-(2-phenylpropyl-(2))-phenyl/-p-phenylendiamin

Das in Beispiel 2 beschriebene Verfahren wird unter Verwendung von 260,3 g (1 Mol)-N,N'-Diphenyl-p-phenylendiamin, 260 g (2,2 Mol) alpha-Methylstyrol und 38,5 g wasserfreiem Aluminiumchlorid wiederholt, wodurch man zu 514 g eines Gemisches aus den im Titel genannten Verbindungen gelangt, das bei 38 bis 40°C schmilzt. Eine gaschromatographische Analyse zeigt, daß die beiden Verbindungen in einem Gewichtsverhältnis von 74 zu 36 enthalten sind.

## Beispiel 12

Gemisch aus N,N'-Di-/4-(1-phenylethyl-(1))-phenyl/-p-phenylendiamin und N-Phenyl-N'-/4-(1-phenylethyl-(1))-phenyl/-p-phenylendiamin

260,3 g (1 Mol) N,N'-Diphenyl-p-phenylendiamin werden in einem 1 Liter Kolben (Rührer, Innenthermometer, Rückflußkühler mit $CaCl_2$-Trockenrohr) aufgeschmolzen, worauf man die Schmezle unter Rühren zuerst mit 38,5 g wasserfreiem Aluminiumchlorid und dann bei einer Temperatur von 135°C innerhalb von 2 Stunden mit 208,3 g (2 Mol) Styrol versetzt. Nach beendeter Styrolzugabe läßt man noch 2 Stunden bei 135°C weiterreagieren. Nach Abkühlen auf 80°C wird das Reaktionsgemisch mit 100 g Toluol versetzt und mit 50 %-iger Natronlauge auf einen pH-Wert von 8 bis 9 eingestellt, worauf man die organische Phase wie in Beispiel 2 beschrieben aufarbeitet. Auf diese Weise gelangt man zu 456 g eines Gemisches aus den im Titel genannten Verbindungen, das bei 60 bis 65°C schmilzt. Eine gaschromatographische Analyse ergibt, daß die beiden Verbindungen darin in einem Gewichtsverhältnis von 54 zu 47 enthalten sind.

<u>Beispiel 13</u>

Gemisch aus N-/4-(2,4,4-trimethylpentyl-(2))-phenyl/-N'-(2-methylphenyl)-p-phenylendiamin, N-Phenyl-N'-/2-methyl-4-(2,4,4-trimethylpentyl-(2))-phenyl/-p-phenylendiamin und N-/4-(2,4,4-Trimethylpentyl-(2))-phenyl/-N'-/2-methyl-4-(2,4,4-trimethylpentyl-(2))-phenyl/-p-phenylendiamin

a) N-Phenyl-N'-(2-methylphenyl)-p-phenylendiamin

220 g Hydrochinon, 10 g $FeCl_2$ und 200 g einer Mischung aus Anilin und o-Toluidin (Gesamtmischung: 232 g Anilin und 268 g o-Toluidin) werden in einem Reaktionskolben vereinigt und auf 250°C erhitzt. Sodann gibt man die restliche Aminmischung mit solcher Geschwindigkeit zu, daß eine Temperatur von 250 bis 260°C aufrechterhalten bleibt. Das Destillat wird in 60 ml Toluol gesammelt, wodurch die Abtrennung des Reaktionswassers erleichtert wird.

Der Katalysator wird durch mehrmalige Wäsche mit Wasser entfernt. Aus der so erhaltenen Reaktionsmischung werden bei einem Druck von 40 mbar alle flüchtigen Bestandteile bis 290°C entfernt. Als Rückstand verbleibt ein in der Kälte erstarrender Feststoff, der in der Hauptsache aus N-Phenyl-N'-(2-methylphenyl)-p-phenylendiamin besteht, welches bei 50 bis 60°C schmilzt.

b) Gemisch aus N-/4-(2,4,4-Trimethylpentyl-(2))-phenyl7-N'-(2-methylphenyl)-p-phenylendiamin, N-Phenyl-N'-/2-methyl-4-(2,4,4-trimethylpentyl-(2))-phenyl7-p-phenylendiamin und N-/4-(2,4,4-Trimethylpentyl-(2))-phenyl7-N'-/2-methyl-4-(2,4,4-trimethylpentyl-(2))-phenyl7-p-phenylendiamin. 180,1 g des in obiger Weise erhaltenen Produkts werden in einem Autoklav aufgeschmolzen und nacheinander mit 6,5 g wasserfreiem Aluminiumchlorid und 257 g (2,3 Mol) Diisobuten versetzt. Der Reaktor wird gegen die Atmosphäre verschlossen und die Reaktionsmischung 7 Stunden auf 150°C aufgeheizt. Dabei baut sich ein Überdruck von etwa 1,2 bar auf. Zur Katalysatorentfernung wird das Reaktionsgemisch auf 110°C abgekühlt und mit 4,2 g Natriumchlorid sowie 6,5 g basischem Aluminiumoxid versetzt und 30 Minuten gerührt. Die so neutralisierte Reaktionsmischung wird über ein Druckfilter filtriert. Das Filtrat wird einer Vakuumdestillation unterworfen (35 mbar, bis 170°C Blasentemperatur) und der verbleibende Rückstand abgekühlt, wodurch man zu 350 g eines Gemisches der im Titel genannten Verbindungen gelangt, das bei 45 bis 50°C schmilzt. Eine gaschromatographische Analyse zeigt, daß die drei Verbindungen darin in einem Gewichtsverhältnis von 42 zu 32 zu 26 enthalten sind.

## Beispiel 14

Gemisch aus N,N'-Di-/4-(2,4,4-trimethylpentyl-(2))-phenyl7-p-phenylendiamin und N-Phenyl-N'-/4-2,4,4-trimethylpentyl-(2))-phenyl7-p-phenylendiamin (Eintopfverfahren)

In einem Niederdruckautoklav werden 110 g Hydrochinon, 5 g $FeCl_2$ und 100 g Anilin vermischt und auf 250°C erhitzt. Sodann gibt man weitere 132 g Anilin mit solcher Geschwindigkeit zu, daß eine Temperatur von 250 bis 260°C aufrechterhalten bleibt. Das Destillat wird in 30 ml Toluol gesammelt, wodurch die Abtrennung des

Reaktionswassers erleichtert wird. Nachdem 36 g Reaktionswasser abgeschieden sind, wird ein Druck von 35 mbar angelegt und das überschüssige Anilin ausdestilliert. Der verbleibende Kolbeninhalt, der in der Hauptsache aus N,N'-Diphenyl-p-phenylendiamin besteht, wird mit 257 g Diisobuten versetzt und auf 130°C erhitzt. Bei gegen die Atmosphäre verschlossenem Reaktor wird dann 7 Stunden bei 130°C gerührt. Hierauf wird das Reaktionsgemisch auf 110°C abgekühlt, mit 4,2 g Natriumchlorid und 6,5 g basischem Aluminiumoxid versetzt, 30 Minuten gerührt und über einen Druckfilter filtriert. Das Filtrat wird einer Vakuumdestillation (35 mbar, bis 170°C Blasentemperatur) unterworfen und der verbleibende Rückstand abgekühlt, wodurch man zu 462 g eines hauptsächlich aus einem Gemisch der im Titel genannten Verbindungen bestehenden Produkts gelangt, das bei 64 bis 66°C schmilzt. Eine gaschromatographische Analyse zeigt, daß die beiden Verbindungen darin in einem Gewichtsverhältnis von 75 zu 25 enthalten sind.

## Beispiel 15

In diesem Beispiel wird anhand einer Naturkautschuk-Mischung die Schutzwirkung des Verbindungsgemisches von Beispiel 1 im Vergleich zu einer Kontrolle ohne Stabilisator und zu drei handelsüblichen Stabilisatoren bei Heißluftalterung im Wärmeschrank nach DIN 50 011 gezeigt. Die hierzu verwendete Kautschukmischung geht aus folgender Tabelle hervor:

Tabelle I

| Bestandteile | Gewichtsteile |
|---|---|
| Naturkautschuk | 100 |
| HAF-Ruß | 50 |
| Weichmacheröl | 3 |
| Zinkoxid | 3 |
| Stearinsäure | 1 |
| Schwefel | 2,5 |
| Mercaptobenzothiazoyl-2-cyclohexylsulfenamid (Beschleuniger) | 0,6 |

Es wurden insgesamt fünf Ansätze auf Basis obiger Kautschukmischung untersucht, und zwar:

Ansatz 1 = Kautschukmischung gemäß Tabelle I (Kontrolle - ohne Stabilisator)

Ansatz 2 = Kautschukmischung gemäß Tabelle I + 1 Gewichtsteil N,N'-Diphenyl-p-phenylendiamin (= DPPD) als Stabilisator (Stand der Technik)

Ansatz 3 = Kautschukmischung gemäß Tabelle I + 1 Gew.-Teil Gemisch aus N,N'-Di-/4-(2,4,4-trimethylpentyl-(2))-phenyl7-p-phenylendiamin und N-Phenyl-N'-/4-(2,4,4-trimethylpentyl-(2))-phenyl7-p-phenylendiamin (Gewichtsverhältnis 64 zu 36).als Stabilisator (Produkt von Beispiel 1 - Erfindung).

Ansatz 4 = Kautschukmischung gemäß Tabelle I + 1 Gew.-Teil p,p'-Dioctyldiphenylamin (= ODPA) als Stabilisator (Stand der Technik)

Das Vulkanisationsoptimum der Ansätze liegt bei 25 min und einer Pressentemperatur von 140°C. Gealtert wird 6

Tage bei 90°C im Umluftofen nach DIN 50 011. Die Ergebnisse sind in der folgenden Tabelle wiedergegeben.

Tabelle II

| Ansatz | ursprüngliche Zugfestigkeit ($N/mm^2$) | Zugfestigkeit nach Alterung ($N/mm^2$) | verbliebene Zugfestigkeit in % |
|---|---|---|---|
| 1 | 22,6 | 8,3 | 36 |
| 2 | 22,2 | 14,1 | 64 |
| 3 | 22,5 | 19,4 | 87 |
| 4 | 22,5 | 10,6 | 47 |

Die Ergebnisse zeigen, daß die vorliegende Verbindung sowohl gegenüber dem DPPD als auch dem ODPA eine wesentlich verbesserte Schutzwirkung besitzt. Die verbesserte Schutzwirkung gegenüber DPPD erklärt sich einleuchtend dadurch, daß das DPPD bei den für eine optimale Alterungsschutzwirkung notwendigen Dosierungen aufgrund seiner Kautschukunverträglichkeit in starkem Umfang ausblüht und so seine Schutzwirkung nicht mehr voll entfalten kann. Das vorliegende Verbindungsgemisch bleibt dagegen völlig in der Polymerphase gelöst und bringt hierdurch seine Schutzwirkung ganz zur Geltung. Die schlechtere Schutzwirkung des ODPA ist dadurch zu erklären, daß es bei den üblichen Verarbeitungstemperaturen bereits in erheblichem Umfang flüchtig ist, während die vorliegende Verbindung aufgrund wesentlich geringerer Flüchtigkeit praktisch nicht aus dem schützenden Polymer verdampft.

Beispiel 16

In diesem Beispiel wird anhand von Verdampfungsversuchen die unterschiedliche Flüchtigkeit des Verbindungsgemisches von Beispiel 1 und verschiedener handelsüblicher Stabilisatoren und Alterungsschutzmittel nachgewiesen. Hierzu

wiegt man in eine Petrischale mit einem Durchmesser von 5 cm jeweils 2 g der zu prüfenden Substanz auf 0,001 g genau ein und verteilt sie darin gleichmäßig. Die Petrischalen werden dann 2 Stunden im Umluftwärmeschrank bei 150°C gelagert und nach Abkühlen im Exsikkator ausgewogen. Der Verdampfungsverlust wird in % ermittelt. Die folgende Tabelle III zeigt die dabei erhaltenen Ergebnisse.

Tabelle III

| Substanz | Verdampfungsverlust in % |
|---|---|
| DPPD | 2,9 |
| Verbindungsgemisch von Beispiel 1 | 0,8 |
| ODPA | 9,9 |

## Beispiel 17

In diesem Beispiel wird anhand einer Styrol-Butadien-Kautschukmischung die Schutzwirkung des Verbindungsgemisches von Beispiel 1 im Vergleich zu einer Kontrolle ohne Stabilisator und zu zwei handelsüblichen Stabilisatoren bei Heißluftalterung im Wärmeschrank nach DIN 50 011 gezeigt. Die hierzu verwendete Kautschukmischung geht aus folgender Tabelle hervor:

Tabelle IV

| Bestandteile | Gewichtsteile |
|---|---|
| Styrol-Butadien-Kautschuk | 100 |
| HAF-Ruß | 50 |
| Weichmacheröl | 5 |
| Zinkoxid | 3 |
| Stearinsäure | 1,5 |

Tabelle IV (Fortsetzung)

| Bestandteile | Gewichtsteile |
|---|---|
| Schwefel | 3 |
| Benzothiazol-2-cyclohexylsulfenamid (Beschleuniger) | 1 |
| Mercaptobenzothiazoyl-2-cyclohexylsulfenamid (Beschleuniger) | 0,5 |

Es werden vier Ansätze auf Basis dieser Kautschukmischung untersucht, die bis auf die andersartig zusammengesetzte Kautschukmischung völlig den Ansätzen 1 bis 4 von Beispiel 15 entsprechen.

Die optimale Vulkanisation der Ansätze liegt bei 15 min und einer Pressentemperatur von 160°C. Gealtert wird 6 Tage bei 90°C im Umluftofen nach DIN 50 011. Die Ergebnisse sind in der folgenden Tabelle wiedergegeben.

Tabelle V

| Ansatz | ursprüngliche Zugfestigkeit ($N/mm^2$) | Zugfestigkeit nach Alterung ($N/mm^2$) | verbliebene Zugfestigkeit in % |
|---|---|---|---|
| 1 | 16,9 | 9,6 | 57 |
| 2 | 18,1 | 13,6 | 75 |
| 3 | 16,6 | 15,7 | 95 |
| 4 | 17,6 | 10,8 | 61 |

## Beispiel 18

Die nach Beispiel 15 erhaltenen Vulkanisate werden einer Sauerstoffalterung nach DIN 53 508 in einer Sauerstoffbombe nach Bierer-Davis unterworfen. Gealtert wird 8 Tage

bei 70°C und 21 bar Sauerstoffdruck. Die Ergebnisse gibt die folgende Tabelle wieder.

Tabelle VI

| Ansatz | ursprüngliche Zugfestigkeit ($N/mm^2$) | Zugfestigkeit nach Alterung ($N/mm^2$) | verbliebene Zugfestigkeit in % |
|---|---|---|---|
| 1 | 22,6 | 2,3 | 10 |
| 2 | 22,2 | 9,0 | 45 |
| 3 | 22,5 | 18,3 | 82 |
| 4 | 22,5 | 8,5 | 38 |

Beispiel 19

Die nach Beispiel 17 erhaltenen Vulkanisate werden einer Sauerstoffalterung gemäß Beispiel 18 unterworfen. Die Ergebnisse faßt die folgende Tabelle zusammen.

Tabelle VII

| Ansatz | ursprüngliche Zugfestigkeit ($N/mm^2$) | Zugfestigkeit nach Alterung ($N/mm^2$) | verbliebene Zugfestigkeit in % |
|---|---|---|---|
| 1 | 16,9 | 4,0 | 24 |
| 2 | 18,1 | 11,8 | 69 |
| 3 | 17,6 | 16,3 | 92 |
| 4 | 17,0 | 10,2 | 58 |

## Beispiel 20

Die nach Beispiel 15 erhaltenen Vulkanisate, die zusätzlich noch 2,0 Gewichtsteile eines Ozonschutzwachses enthalten, werden der Ozonalterung nach DIN 53 509 bei 25°C, 25 % relativer Luftfeuchtigkeit und einer Ozonkonzentration von 50 pphm unterworfen. Nach 6, 24 und 48 Stunden wird die Rißbildung mittels folgender Bewertungsskala beurteilt:

0 = keine Risse
1 = schmale, flache Risse
2 = mäßig breite und mäßig tiefe Risse, deutlich sichtbar
3 = breite, tiefe Risse

Die dabei erhaltenen Ergebnisse sind folgender Tabelle zu entnehmen:

Tabelle VIII

| Ansatz | Rißbildung nach 6 h | Rißbildung nach 24 h | Rißbildung nach 48 h |
|---|---|---|---|
| 1 | 2 bis 3 | 3 | 3 |
| 2 | 1 | 2 | 2 bis 3 |
| 3 | 0 | 1 | 1 bis 2 |
| 4 | 2 bis 3 | 3 | 3 |

Die obigen Daten zeigen, daß das ODPA keinerlei Ozonschutzwirkung besitzt, also die Grundstruktur des Diphenylamins nicht geeignet ist, um ein brauchbares Antiozonant zu liefern. Das DPPD besitzt infolge seiner Grundstruktur als p-Phenylendiamin zwar eine Ozonschutzwirkung, die aber im Vergleich zur vorliegenden Verbindung nur mäßig ist. Dies ist mit der geringen Löslichkeit dieser Verbindung in Polymeren zu erklären.

## Beispiel 21

Die nach Beispiel 15 erhaltenen Vulkanisate werden zur Ermittlung der Wirksamkeit der verschiedenen Stabilisatoren als Ermüdungsschutzmittel einer Dauerknickprüfung unterzogen. Diese Dauerknickprüfung wird bei einer Frequenz von 100 Hertz und Vordehnung von 90, 100, 116 und 126 % durchgeführt, wobei die Anzahl der Hübe bis zum Bruch der Proben als Bewertungszahl für die Ermüdungsschutzwirkung herangezogen wird. Die Ergebnisse sind in der folgenden Tabelle zusammengefaßt.

### Tabelle IX

| Ansatz | Anzahl der Hübe x $10^3$ bis zum Bruch bei Vordehnung von | | | |
|---|---|---|---|---|
| | 90 % | 100 % | 116 % | 126 % |
| 1 | 295 | 245 | 200 | 165 |
| 2 | 340 | 340 | 325 | 300 |
| 3 | 490 | 490 | 485 | 470 |
| 4 | 280 | 260 | 260 | 225 |

Das vorliegende Verbindungsgemisch ist demnach auch ein gutes Ermüdungsschutzmittel. ODPA weist zwar einen schwachen Ermüdungsschutz auf, ist aber für dynamisch hochbeanspruchte Artikel nicht brauchbar. Auch der Ermüdungsschutz durch DPPD reicht nicht an den der erfindungsgemäßen Verbindung heran.

## Beispiel 22

Die Ansätze 1 bis 4 nach Beispiel 15 werden so hergestellt, daß zunächst jeweils eine Grundmischung bestehend aus allen Bestandteilen mit Ausnahme des Schwefels und des Beschleunigers gebildet wird, wobei die Herstellung der jeweiligen Grundmischung in einem Stempelkneter bei heute in der Gummiindustrie üblichen Temperaturen von 180 bis 190°C vorgenommen wird. Nach Abkühlen der Grundmischung mischt man dann bei 100°C auf einem Walzwerk Schwefel und den Beschleuniger zu, worauf man die jeweiligen Ansätze wie in Beispiel 15 beschrieben vulkanisiert und die jeweils erhaltenen Vulkanisate ebenfalls wie in Beispiel 15 angegeben altert. Die Ergebnisse gibt die folgende Tabelle wieder.

Tabelle X

| Ansatz | ursprüngliche Zugfestigkeit ($N/mm^2$) | Zugfestigkeit nach Alterung ($N/mm^2$) | verbliebene Zugfestigkeit in % |
|---|---|---|---|
| 1 | 20,6 | 3,1 | 15 |
| 2 | 20,4 | 7,6 | 38 |
| 3 | 23,3 | 19,5 | 84 |
| 4 | 20,6 | 8,9 | 43 |

Die Ergebnisse zeigen, daß das vorliegende Verbindungsgemisch (Ansatz 3) sowohl gegenüber dem DPPD (Ansatz 2) als auch dem ODPA (Ansatz 4) eine wesentlich verbesserte Schutzwirkung besitzt. Zugleich belegen diese Untersuchungen - besonders im Vergleich zu den Versuchsergebnissen von Beispiel 15 - auch, daß dieses verbesserte Verhalten des vorliegenden Stabilisators vor allem bei den heute allgemein üblichen hohen Verarbeitungstemperaturen bei der Herstellung von Kautschukgrundmischungen eine Folge seiner geringen Flüchtigkeit gegenüber Verbindungen des Standes der Technik ist.

## Beispiel 23

In diesem Beispiel wird anhand einer Kautschukmischung gemäß Beispiel 15 die Alterungsschutzwirkung der vorliegenden Verbindungen im Vergleich zur Kontrollprobe (ohne Stabilisator) und zu den handelsüblichen Produkten DPPD und ODPA dargestellt. Gealtert wird wiederum mittels Heißluft in einem Wärmeschrank bei 90°C nach DIN 50 011.

| Stabilisator | Zugfestigkeit /kp/cm²/ nach Tagen Alterung | | |
|---|---|---|---|
| | 0 Tage | 3 Tage | 6 Tage |
| Ohne | 234 | 82 (35 %) | 57 (24 %) |
| DPPD | 230 | 159 (69 %) | 120 (52 %) |
| ODPA | 234 | 150 (64 %) | 105 (45 %) |
| Beispiel 2 | 206 | 205 (99 %) | 148 (72 %) |
| Beispiel 3 | 221 | 180 (81 %) | 167 (76 %) |
| Beispiel 4 | 216 | 199 (92 %) | 165 (76 %) |
| Beispiel 5 | 220 | 172 (78 %) | 158 (72 %) |
| Beispiel 6 | 205 | 194 (95 %) | 154 (75 %) |
| Beispiel 7 | 205 | 186 (91 %) | 148 (72 %) |
| Beispiel 8 | 207 | 180 (87 %) | 135 (65 %) |
| Beispiel 9 | 204 | 182 (89 %) | 137 (67 %) |
| Beispiel 10 | 213 | 204 (96 %) | 154 (72 %) |
| Beispiel 11 | 214 | 188 (88 %) | 133 (62 %) |
| Beispiel 12 | 230 | 193 (84 %) | 147 (64 %) |

Die Ergebnisse belegen, daß praktisch alle vorliegenden Verbindungen sowohl gegenüber DPPD als auch ODPA eine wesentlich verbesserte Schutzwirkung besitzen.

Patentansprüche

1. N,N'-Diphenyl-p-phenylendiamine der allgemeinen Formel I

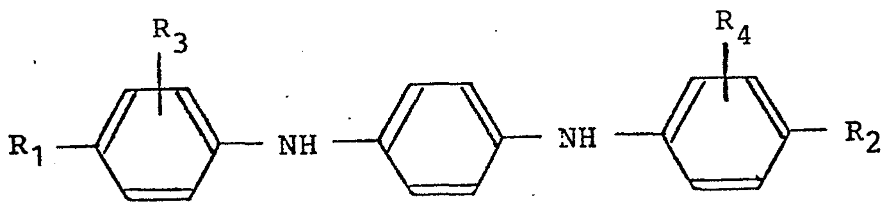 (I),

worin $R_1$ und $R_2$ jeweils gleich oder verschieden sein können und Wasserstoff, 2-Methylbutyl-(2), 2,4,4-Trimethylpentyl-(2), 4,6-Dimethylheptyl-(2), 4,6,8-Trimethylnonyl-(2), Cyclohexyl, 1-Phenylethyl-(1) oder 2-Phenylpropyl-(2) bedeuten, jedoch nicht zugleich Wasserstoff sein können, und
$R_3$ und $R_4$ jeweils gleich oder verschieden sein können und Wasserstoff, Methyl, Ethyl oder Methoxy sind.

2. Verbindungen nach Anspruch 1, dadurch gekennzeichnet, daß $R_1$ und $R_2$ gleich oder verschieden sind und Wasserstoff oder 2,4,4-Trimethylpentyl-(2) bedeuten, jedoch nicht zugleich Wasserstoff darstellen, und $R_3$ und $R_4$ gleich oder verschieden sind und Wasserstoff, Methyl, Ethyl oder Methoxy bedeuten.

3. Verbindungen nach Anspruch 1, dadurch gekennzeichnet, daß $R_1$ und $R_2$ gleich oder verschieden sind und Wasserstoff oder 1-Phenylethyl-(1) bedeuten, jedoch nicht zugleich Wasserstoff darstellen, und $R_3$ und $R_4$ gleich oder verschieden sind und Wasserstoff, Methyl, Ethyl oder Methoxy bedeuten.

4. Verbindungen nach Anspruch 1, dadurch gekennzeichnet, daß $R_1$ und $R_2$ gleich oder verschieden sind und Wasserstoff oder 2-Phenylpropyl-(2) bedeuten, jedoch nicht zugleich Wasserstoff darstellen, und $R_3$ und $R_4$ gleich oder verschieden sind und Wasserstoff, Methyl, Ethyl oder Methoxy bedeuten.

5. Verfahren zur Herstellung von N,N'-Diphenyl-p-phenylendiaminen der in Anspruch 1 angegebenen allgemeinen Formel I, dadurch gekennzeichnet, daß man ein N,N'-Diphenyl-p-phenylendiamin der allgemeinen Formel II

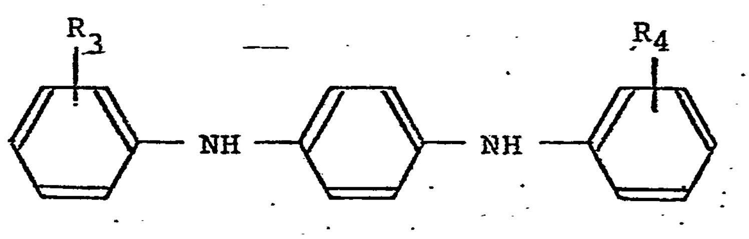 (II)

worin $R_3$ und $R_4$ die in Anspruch 1 genannten Bedeutungen haben, mit 2-Methylbuten-(1), Diisobuten, Tripropylen, Tetrapropylen, Cyclohexen, Styrol, alpha-Methylstyrol oder Gemischen hiervon bei erhöhter Temperatur, gegebenenfalls erhöhtem Druck und gegebenenfalls in Anwesenheit eines organischen Lösungsmittels, in an sich bekannter Weise in Gegenwart eines Friedel-Crafts-Katalysators umsetzt.

6. Verwendung der N,N'-Diphenyl-p-phenylendiamine der in Anspruch 1 angegebenen allgemeinen Formel I zur Stabilisierung organischer Materialien.

Europäisches Patentamt

**EUROPÄISCHER RECHERCHENBERICHT**

**0072575**
Nummer der Anmeldung

EP 82 10 7546.2

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int Cl.³) |
|---|---|---|---|
| D,A | US - A - 3 305 584 (R.B. SPACHT)<br>* Spalte 4, Zeilen 56 bis 70 *<br>-- | 1-6 | C 07 C 87/58<br>C 09 K 15/18<br>// C 07 C 93/14 |
| A | US - A - 3 432 460 (R.B. SPACHT)<br>* vollständig *<br>---- | 1-6 | |

**RECHERCHIERTE SACHGEBIETE (Int. Cl.³)**

C 07 C 87/00
C 09 K 15/18

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 08-11-1982 | BREW |